# EUROPÄISCHE PATENTANMELDUNG

(11) **EP 4 043 760 A1**
(43) Veröffentlichungstag der Anmeldung: **17.08.2022**
(21) Anmeldenummer: 21156842.3
(22) Anmeldetag: 12.02.2021
(51) Int. Cl.: F16J 15/00, F16J 15/16, F16J 15/447, F16C 33/78, F16C 33/80, F16J 15/40, F16J 15/34

(54) **DICHTUNGSANORDNUNG, GEHÄUSEANORDNUNG, GETRIEBE, INDUSTRIE-APPLIKATION UND COMPUTERPROGRAMMPRODUKT**

(71) Anmelder: Flender GmbH, 46395 Bocholt (DE)
(72) Erfinder: Schmeink, Franz, 46395 Bocholt (DE); Dinter, Ralf Martin, 45888 Gelsenkirchen (DE)
(74) Vertreter: Michalski Hüttermann & Partner Patentanwälte mbB

(57) **Zusammenfassung**

Die Erfindung betrifft eine Dichtungsanordnung (30), die zur Abdichtung zwischen einer stehenden Komponente (32) und einer drehenden Komponente (34) dient. Die Dichtungsanordnung (30) umfasst eine erste Dichtung (10) mit einer fliehkraftabhebenden Dichtlippe (13) und eine zweite Dichtung (20). Erfindungsgemäß ist die zweite Dichtung (20) als berührungsfreie Labyrinthdichtung (21) ausgebildet. Die Erfindung betrifft auch eine Gehäuseanordnung (55), die eine erfindungsgemäße Dichtungsanordnung (30) aufweist. Ferner betrifft die Erfindung ein Getriebe (50), die mit einer solchen Gehäuseanordnung (55) ausgestattet ist, und eine entsprechend ausgerüstete Industrie-Applikation (60). Gleichermaßen betrifft die Erfindung ein Computerprogrammprodukt (70) zum Simulieren eine Betriebsverhaltens einer erfindungsgemäßen Dichtungsanordnung (30) .

## Beschreibung

Die Erfindung betrifft eine Dichtungsanordnung zur Abdichtung zwischen einer stehenden und einer drehenden Komponente. Die Erfindung betrifft ebenso eine Gehäuseanordnung, die über eine entsprechende Dichtungsanordnung verfügt. Ferner betrifft die Erfindung ein Getriebe mit einer solchen Gehäuseanordnung. Gleichermaßen betrifft die Erfindung eine Industrie-Applikation mit einem derartigen Getriebe und ein Computerprogrammprodukt zum Simulieren eines Betriebsverhaltens einer korrespondierenden Dichtungsanordnung.

Aus dem Dokument US 2010/201075 A1 ist eine Dichtungsanordnung bekannt, die eine Dichtung mit einer Dichtlippe aufweist. Die Komponente mit der Dichtlippe ist in einer drehenden Labyrinthdichtungskomponente angeordnet und dazu ausgebildet, dass sich bei einer Rotation der Dichtlippenkontakt löst. Die Dichtung mit der Dichtlippe und die Labyrinthdichtung sind zueinander radial beabstandet angeordnet.

Die Druckschrift WO 2006/005950 A2 sind mehrere Ausführungsformen einer Labyrinthdichtung bekannt, durch die jeweils eine Abdichtung zwischen einer stehenden und einer drehenden Komponente hergestellt wird. Die Labyrinthdichtungen sind mit Dichtringen aus Elastomer vorgesehen, die abdichtende Kontakte hergestellt werden.

Das Patent US 4,667,967 A1 offenbart eine Dichtsystem, das in Kurbelgehäuse eines Verbrennungsmotors eingesetzt wird. Das Dichtsystem umfasst eine Labyrinthdichtung und eine Dichtung mit einer Dichtlippe. Die Dichtung mit der Dichtlippe ist auf einer der Umgebung zugewandten Seite des Dichtsystems positioniert.

Dichtungen und Dichtungsanordnungen werden in einer Vielzahl von Anwendungen im Maschinenbau eingesetzt. An diese werden steigende Anforderungen in puncto Dichtwirkung, Lebensdauer, Wartungsfreundlichkeit und Kosteneffizienz gestellt. Diese Anforderungen werden insbesondere in Industrie-Applikationen gestellt, die auf einen Dauerbetrieb, beispielsweise über Wochen oder Monate hinweg, ausgelegt sind. Je empfindlicher das Verarbeitungsgut der Industrie-Applikation ist, umso strenger sind insbesondere die Anforderungen an die Dichtwirkung. Der vorliegenden Erfindung liegt die Aufgabenstellung zugrunde, eine Dichtungsanordnung bereitzustellen, die in zumindest einer der skizzierten Punkte eine Verbesserung bietet.

Die Aufgabenstellung wird durch eine erfindungsgemäße Dichtungsanordnung gelöst. Die Dichtungsanordnung dient zu einer Abdichtung zwischen einer stehenden Komponente und einer stehenden Komponente. Unter einer stehenden Komponente ist ein Bauteil zu verstehen, dass im bestimmungsgemäßen Betrieb stationär ist und unter einer drehenden Komponente ein Bauteil, das im bestimmungsgemäßen Betrieb relativ zur stehenden Komponente rotiert. Dies können beispielsweise ein Bereich einer Gehäusewandung oder ein Lagerdeckel und eine Welle sein. Durch die Abdichtung wird ein Austreten eines Schmierstoffs, beispielsweise Öl, in eine Umgebung zumindest minimiert oder komplett unterbunden. Ebenso wird durch die Abdichtung in die dazu entgegengesetzte Richtung ein Eindringen von Schmutz aus der Umgebung zumindest minimiert oder komplett unterbunden. Die Dichtungsanordnung umfasst eine erste Dichtung, die eine fliehkraftabhebende Dichtlippe umfasst. Durch eine hinreichend schnelle Rotation der drehenden Komponente wird eine Fliehkraft hervorgerufen, durch die ein Kontakt der Dichtlippe gelöst wird, und dadurch die Dichtwirkung der ersten Dichtung im Wesentlichen aufgehoben wird. Bei einer hinreichend langsamen Rotation oder im Stillstand der drehenden Komponente hingegen liegt die fliehkraftabhebende Dichtlippe an und entfaltet ihre Dichtwirkung. Des Weiteren umfasst die Dichtungsanordnung eine zweite Dichtung, die mit der ersten Dichtung zusammenwirkt. Erfindungsgemäß ist die zweite Dichtung als berührungsfreie Labyrinthdichtung ausgebildet. Bei der berührungsfreien Labyrinthdichtung wird die Dichtwirkung durch gegenüberliegend und/oder ineinandergreifende, also kämmende, Labyrinthkomponenten hervorgerufen. Die Labyrinthdichtung ist dazu ausgebildet, bei einer hinreichend schnellen Rotation der drehenden Komponente Schmierstoff in Bereiche zu zwingen, die ein Austreten aus der Dichtungsanordnung zumindest minimieren oder komplett unterbinden. Bei der berührungsfreien Labyrinthdichtung treten keine Bauteile miteinander in einen verschleißbehafteten Kontakt, so dass die berührungsfreie Labyrinthdichtung im Wesentlichen wartungsfrei ist. Zwischen den Labyrinthkomponenten kann sich bei der berührungsfreien Labyrinthdichtung entweder Luft oder ein Fluid befinden.

Die erfindungsgemäße Dichtungsanordnung bietet bei Drehzahlen der drehenden Komponente, bei denen die fliehkraftabhebende Dichtlippe fliehkraftbedingt abhebt, eine erhöhte Dichtwirkung durch die zweite Dichtung. Die fliehkraftabhebende Dichtlippe ist derart ausbildbar, dass dies bei Drehzahlen der drehenden Komponente eintritt, die im Wesentlichen einem Dauerbetrieb entsprechen. Eine Dichtungsanordnung, die überwiegende oder im Wesentlich ausschließlich in einem Dauerbetrieb betrieben wird, ist währenddessen folglich im Wesentlichen verschleißfrei. Bei niedrigen Drehzahlen der drehenden Komponente, bei denen die fliehkraftabhebende Dichtlippe anliegt, oder im Stillstand, bietet diese eine erhöhte Dichtwirkung. Währenddessen ist der durch den Kontakt der Dichtlippe hervorgerufene Verschleiß an dieser minimiert. Verschleiß an der Dichtlippe wird dadurch im Wesentlichen auf einen transienten Betrieb begrenzt, in dem die fliehkraftabhebende Dichtlippe abhebt oder wieder zum Anliegen kommt. Hierdurch werden die technisch nutzbare Lebensdauer der Dichtungsanordnung und die Wirtschaftlichkeit einer Industrie-Applikation, die mit einer solchen ausgestattet ist, gesteigert. Der Erfindung liegt unter anderem die überraschende Erkenntnis zugrunde, dass dadurch über das gesamte nutzbare Drehzahlspektrum hinweg eine gesteigerte Dichtwirkung erzielt wird, also ein Austritt von Schmierstoff in die Umgebung und ein Eindringen von Schmutz aus der Umgebung reduziert werden. Die erste Dichtung mit der fliehkraftabhebenden Lippe ist über eine Vorspannkraft ein Betriebspunkt einstellbar, der im Wesentlichen einer Drehzahl entspricht, bei dem die Dichtlippe abhebt. Die Wirksamkeit der beanspruchten Lageranordnung ist dadurch in einfacher Weise einstellbar. Die Lageranordnung kann dazu ausgebildet sein, dass bei mindestens einer Übergangsdrehzahl der drehenden Komponente die erste und zweite Dichtung berührungsfrei sind. Die Übergangsdrehzahl ist bei einer Montage durch Wählen der Vorspannkraft auf die erste Dichtung einstellbar.

In einer Ausführungsform der beanspruchten Dichtungsanordnung sind die erste und zweite Dichtung zueinander axial benachbart angeordnet. Eine Axialrichtung ist dabei auf eine Drehachse der drehenden Komponente bezogen. Die axial benachbarte Anordnung umfasst sowohl ein axiales Abstützen der von Komponenten der ersten und zweiten Dichtung als auch eine beabstandete Anordnung, so dass die erste Dichtung axial im Bereich der zweiten Dichtung positioniert ist, und umgekehrt. Durch die axial benachbarte Anordnung der ersten und zweiten Dichtung sind diese als separate Baugruppen auswählbar und dadurch an eine Vielzahl von Anwendungsfällen anpassbar. Durch die axial benachbarte Anordnung wird ferner eine Eintrittsstrecke für Schmutz aus der Umgebung durch die erste Dichtung verlängert. Die erste Dichtung verwirklicht so das Prinzip einer berührungslosen Labyrinthdichtung und dient einer Unterstützung der zweiten Dichtung im Dauerbetrieb. Die radialen Abmessungen der Dichtungsanordnung, insbesondere deren Außendurchmesser, werden hierdurch minimiert. Dies erlaubt es beispielsweise, an einem Lagerdeckel, an dem die Dichtungsanordnung anzubringen ist, mit reduziertem Innendurchmesser auszubilden. Ferner können die erste und zweite Dichtung durch eine Montagekraft entlang der Axialrichtung montiert werden. Die Dichtungsanordnung ist durch Einschieben schnell montierbar, wobei eine präzise Positionierung der Komponenten einfach erzielbar ist. Insgesamt wird so der Fertigungsaufwand für den Einbau der Dichtungsanordnung reduziert und eine Wartung vereinfacht.

In der beanspruchten Dichtungsanordnung kann die erste Dichtung auf einer umgebungszugewandten Seite der Dichtungsanordnung angeordnet sein. Alternativ kann die zweite Dichtung auf der umgebungszugewandten Seite der Dichtungsanordnung angeordnet sein. Die Dichtungsanordnung ist zwischen der Umgebung und einem Innenraum positioniert, wobei der Innenraum schmierstoffreicher ist als die Umgebung. Der Schmierstoff kann dort als Flüssigkeit und/oder als Aerosol, beispielsweise Ölnebel, vorliegen. In einer Ausführungsform, in der die erste Dichtung auf der umgebungsabgewandten Seite, also der innenraumzugewandten Seite, und die zweite Dichtung auf der umgebungszugewandten Seite der Dichtungsanordnung angebracht ist, wird die erste Dichtung zumindest teilweise mit Schmierstoff benetzt. Eine Benetzung mit Schmierstoff, beispielsweise durch Kontakt mit flüssigem Schmierstoff oder mit Ölnebel, gewährleistet einen verschleißarmen Betrieb der Dichtlippe. Dadurch wird auch in einem transienten Betrieb der Dichtungsanordnung der Verschleiß an der ersten Dichtung minimiert und die technisch nutzbare Lebensdauer der Dichtungsanordnung erhöht. Der skizzierten Ausführungsform liegt unter anderem die überraschende Erkenntnis zugrunde, dass so auch eine Steigerung der Dichtwirkung der Dichtungsanordnung erzielt wird. Infolge der gesteigerten Dichtwirkung ist die beanspruchte Dichtungsanordnung auch für Anwendungen geeignet, bei denen erhöhte Anforderungen an die Reinheit der Umgebung gestellt werden, beispielsweise für die Chip-Fertigung oder die Lebensmittelverarbeitung. Insgesamt dient das Anbringen der zweiten Dichtung auf der umgebungszugewandten Seite der Dichtungsanordnung dazu, eine Dichtwirkung zu steigern, so dass die Dichtungsanordnung zur Verwendung in einer Industrie-Applikation in der Chip-Fertigung oder der Lebensmittelverarbeitung geeignet ausgebildet ist.

Die Ausführungsform, bei der die erste Dichtung auf der umgebungszugewandten Seite der Dichtungsanordnung angeordnet ist, bietet hingegen eine einfachere Zugänglichkeit der Dichtlippe. Infolgedessen ist dort ein Verschleiß ohne Weiteres feststellbar und ein Austausch eines Dichtlippenelements, an dem die Dichtlippe angebracht ist, schnell durchführbar.

Darüber hinaus kann die fliehkraftabhebende Dichtlippe im Bereich einer drehbaren Wandung der zweiten Dichtung angeordnet sein. Insbesondere kann das Dichtlippenelement in Axialrichtung unmittelbar benachbart zur drehbaren Wandung der zweiten Dichtung angeordnet sein. Die zweite Wandung kann einen Bereich einer Labyrinthdichtungskomponente darstellen, der drehfest mit der drehenden Komponente der Dichtungsanordnung verbunden ist. Hierdurch wird auch unter erheblichen Verformungen der Dichtungskomponente oder bei nicht sachgerechter Montage ein reibungsbehafteter Kontakt zwischen der ersten und zweiten Dichtung vermieden. Hierdurch wird insgesamt die Robustheit der beanspruchten Dichtungsanordnung gesteigert.

Ferner kann die beanspruchte Dichtungsanordnung frei von O-Ringen ausgebildet sein. Im Sinne der vorliegenden Ausführungsform ist unter einem O-Ring auch jegliches andere technisch vergleichbare Dichtungselement zu verstehen. Die beanspruchte Dichtungsanordnung verwirklicht somit abgesehen von der ersten Dichtung das Konzept einer im Dauerbetrieb berührungsfreien Dichtungsanordnung, wobei die erste Dichtung dazu ausgebildet ist, bei Stillstand eine kontaktbehaftete Dichtwirkung gewährleistet. Infolge der überraschend gesteigerten Dichtungswirkung der beanspruchten Dichtungsanordnung sind O-Ringe entbehrlich, wodurch die Wirtschaftlichkeit der Dichtungsanordnung weiter gesteigert wird. Darüber hinaus werden durch den Verzicht auf O-Ringe die mechanischen Verluste in der Dichtung infolge von Reibung reduziert.

In einer weiteren Ausführungsform der beanspruchten Dichtungsanordnung ist die erste Dichtung als Radialdichtung ausgebildet. Derartige Radialdichtungen können beispielsweise als Radialwellendichtring ausgebildet sein. Radialdichtungen sind in einer Vielzahl an Größen in einfacher Weise verfügbar und erlauben eine kosteneffiziente Herstellung der beanspruchten Dichtungsanordnung. Ferner ist eine Radialdichtung einfach austauschbar. Dadurch können technische Weiterentwicklungen bei Radialdichtungen in der beanspruchten Dichtungsanordnung ohne Weiteres durch Auswahl entsprechender Radialdichtungen aufgegriffen werden. Die beanspruchte Dichtungsanordnung ist dadurch ausbaubar und auch für besonders langlebige Industrie-Applikationen geeignet. Darüber hinaus erlauben Radialdichtungen, insbesondere Radialwellendichtringe eine zuverlässige Konservierung im Stillstand. Dies ermöglicht beispielsweise eine sichere Lagerung und einen sicheren Transport von Getrieben mit einer solchen Lageranordnung.

Des Weiteren kann die Dichtlippe am Dichtlippenelement angebracht sein. Insbesondere kann die Dichtlippe am Dichtlippenelement angeformt sein. Die Dichtungsanordnung kann auch einen im Wesentlichen L-förmiges Gegenstück umfassen, das im montierten Zustand mit der Dichtlippe zusammenwirkt. Bei einer hinreichend niedrigen Drehzahl der drehenden Komponente liegt zwischen der Dichtlippe und dem im Wesentlichen L-förmigen Gegenstück der Kontakt vor, durch den die erste Dichtung eine Dichtwirkung entfaltet. Der Kontakt ist als umlaufender Linienkontakt ausgebildet und wird durch eine im Wesentlichen radial nach innen gerichtete Rückstellkraft der Dichtlippe hervorgerufen. Der Kontakt zwischen der Dichtlippe und dem L-förmigen Gegenstück kann dadurch eine Kontaktfläche ausbilden, die im Wesentlichen parallel zur Axialrichtung ausgerichtet ist. Die Kontaktfläche kann insbesondere im Bereich eines Wendepunkts eines Austrittspfades für Schmierstoff bzw. Eintrittspfades für Schmutz angeordnet sein. Der Austrittspfad bzw. der Eintrittspfad ist im Bereich der Kontaktfläche im Wesentlichen S-förmig ausgebildet. Insbesondere kann die Kontaktfläche derart ausgebildet sein, dass im Bereich der Kontaktfläche eine lokale Durchtrittsrichtung für Schmierstoff entgegengesetzt einer Gesamtdurchtrittsrichtung ausgebildet ist. Um in einem Stillstand einen Austritt von Schmierstoff zu erreichen, ist es erforderlich, dass Schmierstoff zumindest abschnittsweise in eine der Umgebung abgewandte Richtung fließt. Auch wenn der Kontakt der fliehkraftabhebenden Dichtlippe gelöst ist, wird so eine Dichtwirkung erzielt. Des Weiteren kann zwischen der ersten und zweiten Dichtung und/oder auf einer umgebungsabgewandten Seite der ersten Dichtung ein Rücklaufkanal für Schmierstoff ausgebildet sein.

Ferner kann das Dichtlippenelement auf einer der Umgebung abgewandten Seite der ersten Dichtung angeordnet sein. Korrespondierend kann das im Wesentlichen L-förmige Gegenstück auf einer der Umgebung zugewandten Seite der ersten Dichtung angeordnet sein. Das Dichtlippenelement stellt die empfindlichste Komponente der Dichtungsanordnung dar und wird durch eine solche Anordnung vor Beschädigungen bei einem Montage- oder Wartungsvorgang geschützt. Das Dichtlippenelement kann dadurch axial gegen ein Lager der drehenden Komponente abgestützt angeordnet werden. Dies erlaubt eine präzise Montage der ersten Dichtung, die dadurch eine reduzierte axiale Abmessung aufweisen kann. Die beanspruchte Dichtungsanordnung ist daher bauraumsparend.

Die beanspruchte Dichtungsanordnung kann radial innerhalb eines Lagerdeckels oder einer Gehäusewandung, insbesondere einer Nabe, angeordnet sein. Die Dichtungsanordnung weist in Axialrichtung reduzierte Abmessungen auf, so dass diese ohne Weiteren in einer Gehäusewandung platzierbar ist. Die erlaubt es, auf einen Lagerdeckel zu verzichten, oder den Lagerdeckel baulich zu vereinfachen. Beispielsweise kann der Lagerdeckel als scheibenförmige Abdeckung ausgebildet sein. Wenn die Dichtungsanordnung in einem Lagerdeckel aufgenommen ist, kann dieser im Radialrichtung und/oder Axialrichtung reduzierte Abmessungen aufweisen. Dadurch ist die beanspruchte Dichtungsanordnung in Form eines Nachrüstsatzes bei bestehenden Anwendungen, beispielsweise Getrieben oder Getriebemotoren, einsetzbar. Aufgrund der Kompaktheit der beanspruchten Dichtungsanordnung bieten bestehende Lagerdeckel hinreichend Bauraum um die skizzierte Lösung zu verwirklichen. Der technisch sinnvolle Betrieb von Getrieben und Getriebemotoren ist durch die beanspruchte Dichtungsanordnung insgesamt verlängerbar.

Darüber hinaus kann die zweite Dichtung zumindest teilweise mit einem viskosen Dichtstoff gefüllt sein. Zu den viskosen Dichtstoffen gehören beispielsweise Fette, die zwischen einer drehenden und einer stehenden Labyrinthkomponente eine zusätzliche Dichtwirkung, insbesondere gegen eindringenden Staub, bieten. Die durch die viskosen Dichtstoffe hervorgerufenen Reibungskräfte sind im Dauerbetrieb der Dichtungsanordnung im Wesentlichen vernachlässigbar. Auch dadurch wird die Dichtwirkung der beanspruchten Dichtungsanordnung weiter gesteigert.

Die vorliegende Aufgabenstellung wird auch durch eine erfindungsgemäße Gehäuseanordnung gelöst. Die Gehäuseanordnung umfasst eine Gehäusewandung, durch die ein Innenraum von einer Umgebung getrennt wird. Die Gehäusewandung weist eine Nabe auf, in der ein drehbares Lager angeordnet ist. Darin ist eine Welle drehbar gelagert, die als drehende Komponente im Sinne der erfindungsgemäßen Dichtungsanordnung aufzufassen ist. Auf einer der Umgebung zugewandten Seite des drehbaren Lagers, das beispielsweise als Wälzlager oder Gleitlager ausgebildet sein kann, ist eine Dichtungsanordnung positioniert, die zu Schutz des drehbaren Lagers dient. Das Lager ist im Innenraum angeordnet, so dass durch die Dichtungsanordnung ein Austritt von Schmierstoff in die Umgebung und ein Eintritt von Schmutz aus der Umgebung zumindest minimiert wird. Erfindungsgemäß ist die Dichtungsanordnung nach einer der oben dargestellten Ausführungsformen ausgebildet.

Ebenso wird die zugrundeliegende Aufgabe durch ein erfindungsgemäßes Getriebe gelöst. Das Getriebe umfasst eine Gehäuseanordnung, in der ein Radsatz aufgenommen ist. Erfindungsgemäß ist die Gehäuseanordnung nach einer der oben skizzierten Ausführungsformen ausgebildet. Das Getriebe ist weist eine gesteigerte Lebensdauer auf, woraus sich ein verringerter Wartungsaufwand über dessen Einsatzdauer ergibt. Das Getriebe ist auch dazu geeignet, bei erhöhten Geschwindigkeiten betrieben zu werden. Ebenso ist das Getriebe in Anwendungen einsetzbar, bei denen gesteigerte Anforderungen an die Reinheit der Umgebung gestellt werden, beispielsweise die Chip-Fertigung oder die Lebensmittelverarbeitung. Für bestehende Getriebe wird so das mögliche Einsatzspektrum erweitert. Das Getriebe kann dabei auch ein Getriebe bzw. eine Getriebeeinheit eines Getriebemotors sein.

Gleichermaßen wird die eingangs dargestellte Aufgabenstellung durch eine erfindungsgemäße Industrie-Applikation gelöst. Die Industrie-Applikation umfasst eine Antriebseinheit, durch die eine Antriebsleistung für eine Abtriebseinheit bereitgestellt wird. Die Antriebseinheit ist über ein Getriebe mit der Abtriebseinheit verbunden. Die Antriebseinheit kann beispielsweise als Elektromotor, Verbrennungsmotor oder Hydraulikmotor ausgebildet sein. Die Abtriebseinheit kann als mechanische Anwendung ausgebildet sein, durch die die Verwendung der Industrie-Applikation charakterisiert ist, beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Rührzerkleinerer, Hubvorrichtung, Extruder, Roboter, Müllpresse oder Schrottpresse. Durch die erfindungsgemäße Dichtungsanordnung wird deren Lebensdauer gesteigert und dadurch die Zuverlässigkeit und Wirtschaftlichkeit der entsprechenden Industrie-Applikationen erhöht.

Ferner wird die oben dargelegte Aufgabe durch ein erfindungsgemäßes Computerprogrammprodukt gelöst, durch das das Betriebsverhaltens einer Dichtungsanordnung simulierbar ist. Dazu kann ein Fließen von Schmiermittel aus einem Innenraum in Richtung einer Umgebung und dessen Durchtrittsverhalten an einer ersten und/oder zweiten Dichtung der Dichtungsanordnung simuliert werden. Dies kann unter Berücksichtigung einer Rotation einer drehenden Komponente gegenüber einer stehenden Komponente erfolgen. Abhängig von einer Drehzahl der drehenden Komponente kann ein Verformungsverhalten einer fliehkraftabhebenden Dichtlippe simuliert werden. Dazu kann das Computerprogrammprodukt über ein Physikmodul verfügen, das fluidmechanische Simulationen und/oder Verformungssimulationen erlaubt. Das Physikmodul kann über Datenschnittstellen verfügen, über die Randbedingungen, wie beispielsweise eine Schmierstofftemperatur, eine Umgebungstemperatur, ein Kontaminationsgrad der Umgebung, usw. einstellbar sind. Das Physikmodul kann über entsprechende lauffähige Simulationsroutinen verfügen. Über zumindest eine Datenschnittstelle können die Simulationsresultate auch anderen simulationsgerichteten Computerprogrammprodukten zur Verfügung gestellt werden. Das Computerprogrammprodukt umfasst ferner einen Datensatz, durch den zumindest die Dichtungsanordnung in ihrem Aufbau abgebildet ist. Erfindungsgemäß ist die Dichtungsanordnung nach einer der oben skizzierten Ausführungsformen ausgebildet.

Mittels des erfindungsgemäßen Computerprogrammprodukts ist eine Dichtungsanordnung an die Gegebenheiten einer Anwendung anpassbar und optimierbar. Zusätzlich ist ein Betrieb der Dichtungsanordnung im Voraus simulierbar um einen Zeitpunkt eines zu erwartenden Ausfalls oder intolerablen Beschädigung der Dichtungsanordnung zu prognostizieren. Im Zusammenwirken mit Sensordaten einer korrespondierenden realen Dichtungsanordnung erlaubt das erfindungsgemäße Computerprogrammprodukt eine Plausibilisierung der Sensordaten. Bei Feststellung einer hinreichenden Diskrepanz zwischen den Sensordaten und den Simulationsresultaten des erfindungsgemäßen Computerprogrammprodukts kann so auch ein defekter Sensor in einem Getriebe bzw. einer Industrie-Applikation identifiziert werden. Insgesamt kann das Computerprogrammprodukt zum Identifizieren eines defekten Sensors in einer Industrie-Applikation dienen. Dazu kann das Computerprogrammprodukt beispielsweise als sogenannter Digitaler Zwilling ausgebildet sein. Derartige Digitale Zwillinge sind unter anderem in der Offenlegungsschrift US 2017/286572 A1 näher beschrieben. Der Offenbarungsgehalt von US 2017/286572 A1 wird durch Verweisung in die vorliegende Anmeldung mit einbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine Ausführungsform der beanspruchten Dichtungsanordnung in einem Längsschnitt;
- FIG 2: schematisch einen Aufbau einer Ausführungsform einer beanspruchten Industrie-Applikation.

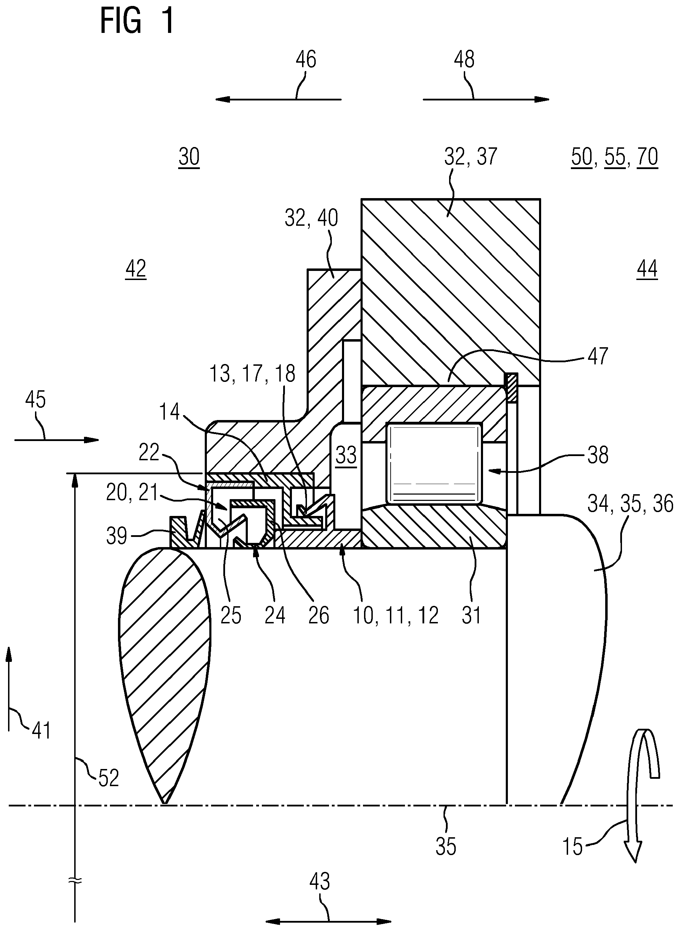

In FIG 1 ist schematisch eine Ausführungsform der beanspruchten Dichtungsanordnung 30 dargestellt, die eine stehende Komponente 32 und eine drehende Komponente 34 umfasst und in einem Getriebe 50 einsetzbar ist. Die stehende Komponente 32 ist als Lagerdeckel 40 ausgebildet ist, der an einer Gehäusewandung 37 angebracht ist und die drehende Komponente 34 als Welle 36. Die Welle 36 ist mit einer Komponente eines nicht näher gezeigten Radsatzes 56 drehfest verbunden. Die Gehäusewandung 37 gehört zu einer Gehäuseanordnung 55, die im Wesentlichen sämtliche stehenden Komponenten eines Getriebes 50 umfassen. Die drehende Komponente 34 ist um eine Drehachse 35 drehbar in einem drehbaren Lager 38 aufgenommen, das in einer Nabe 47 an der Gehäusewandung 37 befestig ist. Durch die Gehäusewandung 37 wird eine Umgebung 42 von einem Innenraum 44 getrennt, und so eine umgebungszugewandte Seite 46 und eine umgebungsabgewandte Seite 48 der Dichtungsanordnung 30 definiert. In der Umgebung 42 liegt eine Kontamination mit Schmutz, beispielsweise Staub, vor. Ferner liegt im Innenraum 44 ein Schmierstoff 33 vor, beispielsweise in Form von Tropfen oder Ölnebel. Durch die Dichtungsanordnung 30 wird ein Eintritt von Schmutz aus der Umgebung 42 in den Innenraum 44 zumindest minimiert. Ebenso wird durch die Dichtungsanordnung 30 ein Austritt von Schmierstoff 33 in die Umgebung 42 zumindest minimiert.

Die Dichtungsanordnung 30 umfasst eine erste Dichtung 10, die als Radialdichtung 11 ausgebildet ist, die ein Dichtlippenelement 12 und ein im Wesentlichen L-förmiges Gegenstück 14 umfasst. Am Dichtlippenelement 12 ist eine fliehkraftabhebende Dichtlippe 13 ausgebildet. Das Dichtlippenelement 12 ist drehfest mit der drehenden Komponente 34 verbunden, so dass durch deren Drehung 15 auf das Dichtlippenelement 12 Fliehkraft ausgeübt wird. Dadurch wird an einer Kontaktfläche 18 ein Kontakt 17 zwischen dem L-förmigen Gegenstück 14 und der fliehkraftabhebenden Dichtlippe 13 gelöst. Bei einem Stillstand oder einer entsprechend niedrigen Drehzahl, also einer langsamen Drehung 15, liegt der Kontakt 17 an der Kontaktfläche 18 zwischen der fliehkraftabhebenden Dichtlippe 13 und dem L-förmigen Gegenstück 14 vor, durch den eine Dichtwirkung der Dichtungsanordnung 30 entfaltet wird. Ein Verschleiß der fliehkraftabhebenden Dichtlippe 13 durch Reibung am L-förmigen Gegenstück 14 wird so minimiert. Die Reibung zwischen dem L-förmigen Gegenstück 14 und der fliehkraftabhebenden Dichtlippe 13 ist Wenn der Kontakt 17 gelöst ist, liegt keine Reibung der fliehkraftabhebenden Dichtlippe 13 vor. Dadurch, dass die erste Dichtung 10 auf der umgebungsabgewandten Seite 48 der Dichtungsanordnung 30 angeordnet ist, sind die fliehkraftabhebende Dichtlippe 13 und/oder das L-förmige Gegenstück 14 zumindest teilweise mit Schmierstoff 33 benetzt. Dadurch wird auch bei Vorliegen des Kontakts 17 in der ersten Dichtung 10 eine Schmierung gewährleistet, durch die der Verschleiß an der ersten Dichtung 10 weiter minimiert wird.

Auf einer der Umgebung 42 zugewandten Seite der Dichtungsanordnung 30 ist benachbart zur ersten Dichtung 10 eine zweite Dichtung 20 angeordnet. Die zweite Dichtung 20 ist als berührungsfreie Labyrinthdichtung 21 ausgebildet. Die zweite Dichtung 20 umfasst eine erste Labyrinthkomponente 22 und eine zweite Labyrinthkomponente 24, die miteinander kämmend montiert sind. Die zweite Labyrinthkomponente 24 ist drehfest an der drehenden Komponente 34 angebracht, so dass eine Wandung 26 der zweiten Labyrinthkomponente 24 der Drehung 15 der drehenden Komponente 34 folgt. Die Wandung 26 ist daher als drehbare Wandung 26 aufzufassen. Die zweite Labyrinthkomponente 24 ist benachbart zum Dichtlippenelement 12 angeordnet und ist durch eine Montagekraft 45 entlang der Axialrichtung 43 am Dichtlippenelement 12 abstützbar. Das Dichtlippenelement 12 wiederum ist benachbart zum Lager 38 positioniert und an dessen Innenring 31 über die Montagekraft 45 abstützbar. Infolgedessen sind ausschließlich drehende Bauteile, also der Innenring 31 des Lagers 38, das Dichtlippenelement 12 und die zweite Labyrinthkomponente 24 aneinander abgestützt. Die erste Labyrinthkomponente 22 ist entlang der Axialrichtung 43 gegen das L-förmige Gegenstück 14 der ersten Dichtung 10 abgestützt. Auch diese Bauteile sind über eine Montagekraft 45 in Axialrichtung 43 montierbar und stellen jeweils stehende Bauteile dar, die in der stehenden Komponente 32 angeordnet sind. Die zweite Dichtung 20 kann zusätzlich mit einem viskosen Dichtstoff 25, beispielsweise einem Fett, zumindest teilweise füllbar bzw. gefüllt sein. Ferner wird die erste Labyrinthkomponente 22 durch einen V-Ring 39, der auf der drehenden Komponente 34 angeordnet ist, in Axialrichtung 43 gedrückt. Die Dichtungsanordnung 30 ist radial innerhalb der stehenden Komponente 32 angeordnet. Eine nach außen weisende Radialrichtung ist in FIG 1 durch den Pfeil 41 versinnbildlicht. Die erste und zweite Dichtung 10, 20 sind axial benachbart zueinander angeordnet, so dass die Dichtungsanordnung 30 einen reduzierten Außendurchmesser aufweist. Die Dichtungsanordnung 30 ist in einem Getriebe 50 einsetzbar, das in FIG 1 nicht näher gezeigt ist. Der Aufbau gemäß FIG 1 ist in einem Computerprogrammprodukt 70 abgebildet, das dazu ausgebildet ist, das Betriebsverhalten der Dichtungsanordnung 30 zu simulieren.

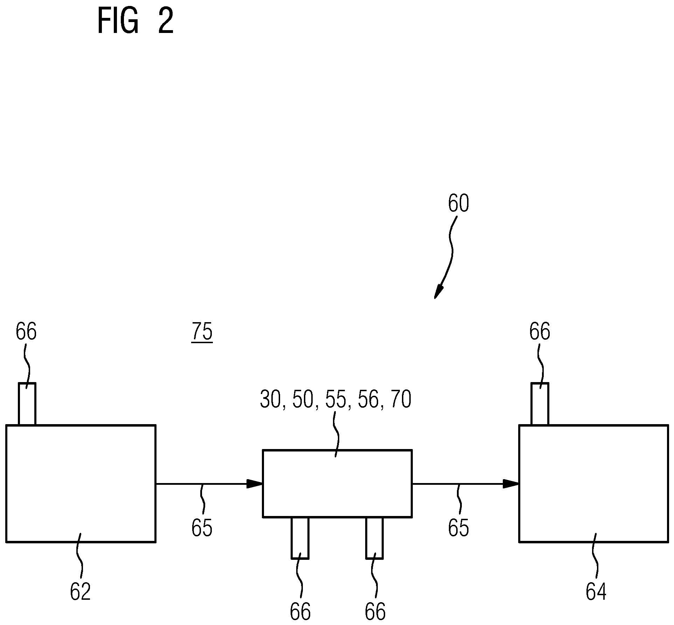

FIG 2 zeigt schematisch einen Aufbau einer Ausführungsform einer beanspruchten Industrie-Applikation 60, die eine Antriebseinheit 62 umfasst, die über ein Getriebe 50 mit einer Abtriebseinheit 64 verbunden ist. Die Antriebseinheit 62 kann als Elektromotor, Verbrennungsmotor oder Hydraulikmotor ausgebildet sein und eine Antriebsleistung 65 bereitstellen. Die Antriebsleistung 65 wird dem Getriebe 50 zugeführt und unter Änderung von Drehzahl und Drehmoment an die Abtriebseinheit 64 weitergeführt. Die Abtriebseinheit 64 ist eine mechanische Anwendung, durch die die Verwendung der Industrie-Applikation 60 charakterisiert ist und über die Antriebsleistung 65 betrieben wird. Die Abtriebseinheit 64 kann derart ausgebildet sein, dass die Industrie-Applikation 60 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Rührzerkleinerer, Hubvorrichtung, Extruder, Roboter, Müllpresse oder Schrottpresse ist. Insbesondere kann die Industrie-Applikation 60 als Anwendung in der Chip-Fertigung oder der Lebensmittelverarbeitung ausgebildet sein. Das Getriebe 50 umfasst eine Gehäuseanordnung 55, in der ein Radsatz 56 aufgenommen. Zur Gehäuseanordnung 55 gehört zumindest eine Dichtungsanordnung 30, die gemäß einer der oben skizzierten Ausführungsformen ausgebildet sein kann. Die Dichtungsanordnung 30 ist in einem Computerprogrammprodukt 70 abgebildet, so dass das Betriebsverhalten der Dichtungsanordnung 30 simulierbar ist. Mittels des Computerprogrammprodukts 70 sind Daten von Sensoren 66, die am Getriebe 50, der Antriebseinheit 62 und/oder der Abtriebseinheit 64 angebracht sein können, auf Plausibilität überprüfbar. Dazu kann das Computerprogrammprodukt 70 mit einer nicht näher skizzierten Simulationsumgebung 75 in einer kommunikativen Datenverbindung stehen. Das Computerprogrammprodukt 70 kann als sogenannter Digitaler Zwilling ausgebildet sein, der Teil der Simulationsumgebung 75 ist, die wiederum ein Digitaler Zwilling der Industrie-Applikation 60 ist.

## Patentansprüche

1. Dichtungsanordnung (30) zur Abdichtung zwischen einer stehenden Komponente (32) und einer drehenden Komponente (34), umfassend eine erste Dichtung (10) mit einer fliehkraftabhebenden Dichtlippe (13) und eine zweite Dichtung (20), **dadurch gekennzeichnet, dass** die zweite Dichtung (20) als berührungsfreie Labyrinthdichtung (21) ausgebildet ist.

2. Dichtungsanordnung (30) nach Anspruch 1, **dadurch gekennzeichnet, dass** die erste Dichtung (10) und die zweite Dichtung (20) zueinander axial benachbart angeordnet sind.

3. Dichtungsanordnung (30) nach Anspruch 1 oder 2, **dadurch gekennzeichnet, dass** die erste Dichtung (10) oder die zweite Dichtung (20) auf einer umgebungszugewandten Seite (46) der Dichtungsanordnung (30) angeordnet ist.

4. Dichtungsanordnung (30) nach einem der Ansprüche 1 bis 3, **dadurch gekennzeichnet, dass** die fliehkraftabhebende Dichtlippe (13) im Bereich einer drehbaren Wandung (26) der zweiten Dichtung (20) angeordnet ist.

5. Dichtungsanordnung (30) nach einem der Ansprüche 1 bis 4, **dadurch gekennzeichnet, dass** die Dichtungsanordnung (30) frei von O-Ringen ausgebildet ist.

6. Dichtungsanordnung (30) nach einem der Ansprüche 1 bis 5, **dadurch gekennzeichnet, dass** die erste Dichtung (10) als Radialdichtung (11) ausgebildet ist.

7. Dichtungsanordnung (30) nach einem der Ansprüche 1 bis 6, **dadurch gekennzeichnet, dass** die fliehkraftabhebende Dichtlippe (13) an einem Dichtlippenelement (12) angebracht ist, die mit einem L-förmigen Gegenstück (14) eine Spaltdichtung bildet.

8. Dichtungsanordnung (30) nach einem der Ansprüche 1 bis 7, **dadurch gekennzeichnet, dass** das Dichtlippenelement (12) auf einer der Umgebung abgewandten Seite (48) der Dichtungsanordnung (30) angebracht ist.

9. Dichtungsanordnung (30) nach einem der Ansprüche 1 bis 8, **dadurch gekennzeichnet, dass** die Dichtungsanordnung (30) radial innerhalb in eines Lagerdeckels (40) oder einer Gehäusewandung (37) angeordnet ist.

10. Dichtungsanordnung (30) nach einem der Ansprüche 1 bis 9, **dadurch gekennzeichnet, dass** die zweite Dichtung (20) zumindest teilweise mit einem viskosen Dichtstoff (25) gefüllt ist.

11. Gehäuseanordnung (55), umfassend eine Gehäusewandung (37), in der eine Nabe (47) mit einem drehbaren Lager (38) für eine Welle (36) angeordnet ist, und an einer der Umgebung zugewandten Seite (46) des drehbaren Lagers (38) eine Dichtungsanordnung (30) zu einem Schutz des drehbaren Lagers (38) anordnet ist, **dadurch gekennzeichnet, dass** die Dichtungsanordnung (30) nach einem der Ansprüche 1 bis 10 ausgebildet ist.

12. Getriebe (50), umfassend eine Gehäuseanordnung (55) und einen darin aufgenommenen Radsatz (56), **dadurch gekennzeichnet, dass** die Gehäuseanordnung (55) nach Anspruch 11 ausgebildet ist.

13. Industrie-Applikation (60), umfassend eine Antriebseinheit (62) und eine Abtriebseinheit (64), die über ein Getriebe (50) drehmomentübertragend miteinander verbunden sind, **dadurch gekennzeichnet, dass** das Getriebe (50) nach Anspruch 11 ausgebildet ist.

14. Computerprogrammprodukt (70) zum Simulieren eines Betriebsverhaltens einer Dichtungsanordnung (30), **dadurch gekennzeichnet, dass** die Dichtungsanordnung (30) nach einem der Ansprüche 1 bis 10 ausgebildet ist.
